Europäisches Patentamt

European Patent Office

Office européen des brevets

(11) Veröffentlichungsnummer: **0 313 897**
**A2**

(12) **EUROPÄISCHE PATENTANMELDUNG**

(21) Anmeldenummer: 88116657.3

(22) Anmeldetag: 07.10.88

(51) Int. Cl.⁴: **G06K 7/10**

(30) Priorität: 28.10.87 DE 3736407

(43) Veröffentlichungstag der Anmeldung:
03.05.89 Patentblatt 89/18

(84) Benannte Vertragsstaaten:
AT BE CH DE ES FR GB GR IT LI LU NL SE

(71) Anmelder: **Aichelin GmbH**
**Postfach 1120**
**D-7015 Korntal-Münchingen 1(DE)**

(72) Erfinder: **Steck-Winter, Hartmut**
**Bachstrasse 1**
**D-7014 Kornwestheim(DE)**

(74) Vertreter: **Rüger, Rudolf, Dr.-Ing. et al**
**Webergasse 3 Postfach 348**
**D-7300 Esslingen/Neckar(DE)**

(54) **Identifizierbare Aufnahme- und Transporteinrichtung für Werkstücke.**

(57) Eine Aufnahme- und Transporteinrichtung (1) für Werkstücke, die in einem Industrieofen oder mit Bad mit Wärme zu behandeln sind und zusammen mit der Aufnahme- und Transporteinrichtung (1) den Industrieofen oder das Bad durchlaufen, enthält an einer Seite eine mehrstellige, temperaturfeste Identifikationseinrichtung (6). Diese Identifikationseinrichtung (6) weist wenigstens je Zahlenstelle eine Reflexionseinrichtung (11,12,18) für von einem Sender ausgestrahlte Energie auf. Die Reflexionseinrichtung einer jeden Zahlenstelle ist derart ausgerichtet, daß sie beim Passieren des Senders entsprechend dem Wert der Binärstelle die Energie des Senders auf einem Empfänger oder eine von dem Empfänger entfernt liegenden Stelle reflektiert.

Fig. 1

EP 0 313 897 A2

## Identifizierbare Aufnahme- und Transporteinrichtung für Werkstücke

Die Erfindung betrifft eine Aufnahme- und Transporteinrichtung für Werkstücke, die in einem Industrieofen mit Wärme zu behandeln sind und zusammen mit der Aufnahme- und Transporteinrichtung den Industrieofen durchlaufen.

In vielen Bereichen der Technik und auch im täglichen Leben werden selbsttätig wirkende Lesegeräte verwendet, um Waren zu identifizieren und entsprechend Kassen- oder Lagerverwaltung u.dgl. zu steuern. Hierzu wird auf der Ware oder dem zu indentifizierenden Gut ein Informationsträger angebracht, der durch Aufdrucken von hellen oder dunklen Streifen binär codiert ist, beispielsweise mittels des bekannten bar-Codes. Das automatische Lesegerät, das einen Lichtsender und einen Lichtempfänger enthält, spricht beim Vorbeilaufen der Identifikationseinrichtung auf die unterschiedlichen Reflexionsverhältnisse bei den hellen und dunklen Balken an und erzeugt daraus entsprechende elektrische Signale, die dann weiter verarbeitet werden.

Diese bekannte Anordnung läßt sich nur bei Temperaturen verwenden, die weder zu einem Dunkelwerden der hellen Streifen noch zu einem Verblassen der dunklen Streifen führen, weil sonst das Kontrastverhältnis zu klein wird und von dem Lesegerät nicht mehr interpretiert werden kann. Ein zu geringer Kontrast zwischen den hellen und dunklen Streifen entsteht auch bei Ablagerungen von Staub u.dgl. auf dem Informa tionsträger, weshalb dieses Verfahren nicht geeignet ist, um Aufnahme- und Transporteinrichtungen zu kennzeichnen, die samt der darin enthaltenen Werkstücke durch Industrieöfen laufen, in denen Temperaturen bis zu 1200° C herrschen, um die Werkstücke einer Wärmebehandlung zu unterziehen. Bei derartigen Temperaturen würden die Bedruckungen verbrennen.

Eine weitere Schwierigkeit bei der Indentifikation von derartigen Aufnahme- und Transporteinrichtungen besteht darin, daß sich auf dem Informationsträger ein Niederschlag bilden kann oder sich eine Oberflächenveränderung einstellt, die auf den Werkstücken gezielt erreicht werden soll, auf dem Informationsträger jedoch unerwünschte Effekte hat.

Aufgabe der Erfindung ist es deshalb, Aufnahme- und Transporteinrichtungen für Werkstücke, die in einem Industrieofen mit Wärme zu behandeln sind und zusammen mit den Aufnahmeund Transporteinrichtungen den Industrieofen durchlaufen, zu schaffen, wobei die Aufnahme- und Transporteinrichtungen während oder nach dem Durchlaufen identifizierbar bleiben sollen.

Diese Aufgabe wird erfindungsgemäß durch die Aufnahme-und Transporteinrichtungen mit den Merkmalen des Anspruches 1 gelöst.

Durch die Verwendung von Reflexionseinrichtungen, die die auf sie fallende Energie entsprechend der Wertigkeit der jeweiligen Stelle in unterschiedliche Richtungen reflektieren, nämlich entsprechend dem jeweiligen Wert, entweder zu einem Empfänger hin, oder an einem Empfänger vorbei, kann auch unter ungünstigsten Verhältnissen ein brauchbares Kontrastverhältnis an der Seite des Empfängers erhalten werden, wobei die Reflexionsflächen temperaturempfindlich sind. Selbst wenn beim Aufkohlen der Werkstücke auch die Reflexionsflächen mit einer Rußschicht überzogen werden, erhält der Empfänger in einem Falle noch Energie von dem Sender, während im anderen Falle die Energie des Senders am Empfänger vorbeigeleitet wird, da auch eine berußte Fläche keinen ideal schwarzen Körper darstellt, der die gesamte auf ihn fallende Energie absorbiert. Außerdem hat diese Form der Identifikationseinrichtung den wesentlichen Vorteil, daß sie weitgehend unabhängig von der Art der Energie ist, mit der die Abtastung erfolgt, d.h. es kann zur Abtastung Ultraschall, Licht im sichtbaren, oder Licht im unsichtbaren Bereich verwendet werden. Je nach Zustand der Identifikationseinrichtung kann deswegen die Energieform, mit der die Abtastung erfolgt, frei gewählt werden.

So eignet sich beispielsweise eine Abtastung mit infrarotem Licht recht gut auch bei verrußten Oberläcch, da Kohlenstoffruß infrarotes Licht relativ gut reflektiert. Es könnte allerdings zu Fehlabtastungen auf der Seite des Empfängers führen, wenn die Identifikationseinrichtung auf eine sehr hohe Temperatur aufgeheizt ist und nennenswert in dem Infrarotbereich zu strahlen beginnt, auf den der Sender und der Empfänger abgestimmt sind. In diesem Falle wäre es besser, in einem anderen Wellenlängenbereich oder mit Ultraschall abzutasten, während andererseits im kalten Zustand die Infrarotabtastung eingesetzt werden kann. Ohne Änderung des Informationsträgers kann die Energieart, mit der die Abtastung erfolgt, je weils optimal an den Zustand des Informationsträgers angepaßt werden, der sich innerhalb des Prozeßablaufes für die Werkstücke mehrfach ändern kann.

Eine sehr einfache Identifikationseinrichtung besteht aus einer ebenen Stahlplatte, vorzugsweise Chromnickelstahl, deren von der Aufnahme- und Transporteinrichtung wegweisende plane Seite die Reflexionsflächen der einen Art, also die dem einen binären Wert zugeordneten Reflexionsflächen bildet, während die Reflexionsflächen der anderen Art, die dem anderen binären Wert zugeordnet sind, von Bereichen der Stahlplatte gebildet sind, die aus der Stahlplatte teilweise ausgeschnitten und gegenüber der Oberseite der Stahlplatte geneigt sind. Wenn diese Reflexionsflächen nach hinten aus der Stahlplatte ausgeklinkt sind, jedoch mit einer Kante noch einstückig mit der Stahlplatte verbunden bleiben, ergibt sich eine vereinfachte Herstellung insofern, als ein einfaches Stanzwerkzeug genügt, während andererseits die Anordnung sehr robust ist, da die aus der Ebene der Stahlplatte ausgeklinkten Reflexionsflächen nicht nach vorne überstehen. Da wegen der unterschiedlichen Reflexionsrichtung keine Notwendigkeit besteht, gut spiegelnde Oberflächen zu verwenden, ist die Anordnung unempfindlich gegen Kratzer oder irgendwelchen Niederschlag. Selbst Anlaufen der Platte, beispielsweise wenn die Werkstücke in der Aufnahme- und Transporteinrichtung geglüht werden, beeinträchtigt die Lesbarkeit der Identifikationseinrichtung nicht.

Wenn die einzelnen Reflexionsflächen der Identifikationseinrichtung und/oder der Taktspureinrichtung in zwei Zeilen übereinander angeordnet sind und sich die beiden Zeilen in Transportrichtung der Transport- und Aufnahmeeinrichtung erstrecken, benötigt weder der Sender noch der Empfänder eine zusätzliche Antriebseinrichtung, um den Informationsträger abzutasten, denn das Vorbeibewegen der Aufnahme- und Transporteinrichtung an der ortsfesten Leseeinrichtung genügt, um alle Zahlenstellen des Informationsträgers abzutasten.

Im Falle der binären Codierung ist es von Vorteil, wenn zusätzlich zu der Identifikationseinrichtung eine Taktspureinrichtung vorhanden ist, weil dann ein statisches Ablesen möglich ist, während ohne Taktspureinrichtung eine genau definierte und präzise eingehaltene Relativbewegung zwischen der Leseeinrichtung, bestehend aus Sender und Empfänger, und der Transport- und Aufnahmeeinrichtung aufrecht erhalten werden muß. Im anderen Falle könnte es zu Fehlauswertungen kommen, wenn die Abtastung mit einem festen zeitlichen Raster erfolgt und die Aufnahme- und Transporteinrichtung mit einer von dem zeitlichen Raster abweichenden Geschwindigkeit vorbeigeführt wird. Allerdings benötigt die Taktspureinrichtung zusätzlichen Platz, weshalb bei Platzmangel es zweckmäßiger ist, die Transportgeschwindigkeit sorgfältig zu bestimmen.

Eine andere Möglichkeit, um ohne Taktspureinrichtung auskommen zu können, besteht in der Verwendung eines ternären Zahlensystems, wobei eine dritte Art von Reflexionsflächen zusammen mit einem weiteren Empfänger verwendet wird. Je nach Ausrichtung der Reflexionsflächen wird das von dem Sender ausgestrahlte Licht oder die ausgestrahlte Ultraschallenergie entweder zu keinem der Empfänger oder zu dem einen oder dem anderen Empfänger geleitet. Durch die Verwendung eines ternären Zahlensystems kann die Aufeinanderfolge zweier gleicher Zahlenwerte in zwei benachbarten Zahlenstellen vermieden werden. Die Verwendung einer zusätzlichen Taktspureinrichtung wird dadurch überflüssig.

In der Zeichnung ist ein Ausführungsbeispiel des Gegenstandes der Erfindung dargestellt. Es zeigen:

Fig. 1 eine Aufnahme- und Transporteinricht unt gemäß der Erfindung in einer perspektivischen Darstellung,

Fig. 2 den an der Aufnahme und Transporteinrichtung nach Fig. 1 angebrachten Informationsträger zur Identifikation der Aufnahme- und Transporteinrichtung, in einer perspektivischen Rückansicht,

Fig. 3 eine schematische Darstellung der Wirkung der an dem entlang der Linie III-III geschnittenen Informationsträger nach Fig. 2 angebrachten Reflexionsflächen, in einer Seitenansicht,

Fig. 4 einen Informationsträger für die Aufnahme- und Transporteinrichtung nach Fig. 1 zur Darstellung eines ternären Zahlensystems, in einer perspektivischen Rückansicht und

Fig. 5 und 6 eine schematische Darstellung der Wirkung der Reflexionsflächen des entlang der Linie V-V bzw. IV-IV geschnittenen Informationsträgers nach Fig. 4 in einer Seitenansicht.

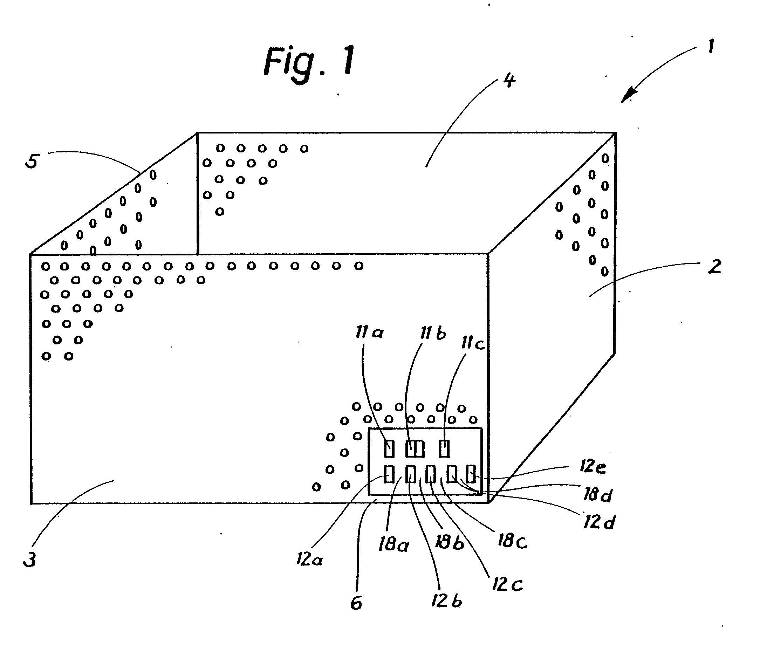

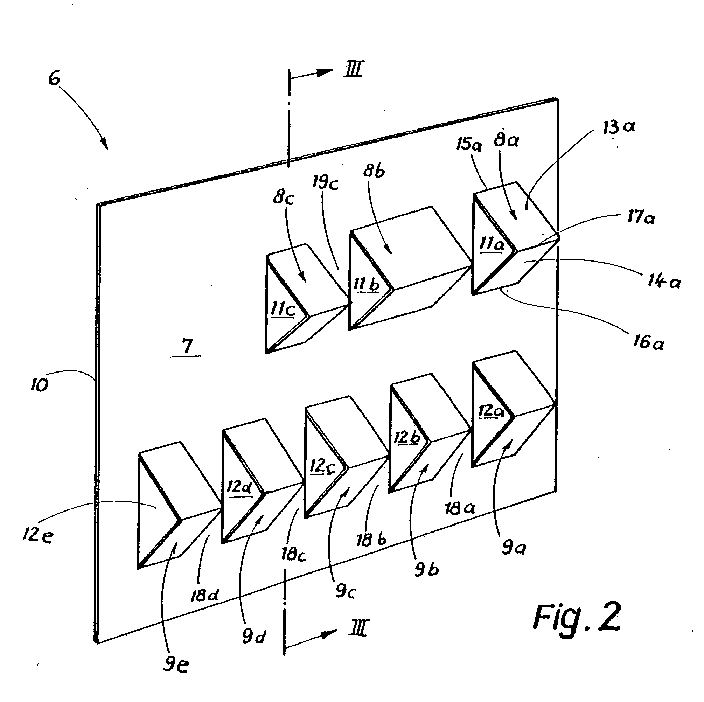

In Fig. 1 ist eine Aufnahme- und Transporteinrichtung 1 schematisch veranschaulicht, die dazu dient, Werkstücke aufzunehmen, um sie durch Industrieöfen und andere Wärmebehandlungsanlagen, wie Salzbäder und dergl., hindurch zu transportieren, wobei während der Wärmebehandlung die Werkstücke in der Aufnahme-und Transporteinrichtung 1 verbleiben. Diese ist deswegen als Korb mit vier gelochten Seitenwänden 2,3,4, 5 sowie einem ebenfalls gelochten Boden ausgebildet, damit die Wärmebehandlungsatmosphäre oder das Bad allseitig an die in der Transporteinrichtung 1 enthaltenen Werkstücke herankommen kann. Zur automatischen maschinellen Identifikation der Transporteinrichtung ist auf ihrer Seitenwand 3 unten rechts ein temperaturfester Informationsträger 6 angebracht, dessen maschinenlesbare Seite von der Transporteinrichtung wegweist. Die Gestalt des Informationsträgers 6 ist aus Fig. 2 ersichtlich.

Der Informationsträger 6 besteht aus einer ca. 2 - 3 mm starken ebenen Stahlplatte 7, aus der in zwei mit Abstand übereinander angeordneten Zeilen oder Reihen Bügel 8 und Bügel 9 zur Rückseite der Stahlplatte 7 hin ausgeklinkt sind; d.h. sie erheben sich über der in Fig. 2 sichtbaren Rückseite der Stahlplatte 7, während an der entsprechenden Stelle in der Vorderseite 10 der Stahlplatte 7 eine zugehörige rechteckige Öffnung 11 bzw. 12 entsteht. Der Bügel 8a besteht aus zwei ebenen, rechteckigen Flächenstücken 13a und 14a, die längs einer Schmalseite 15a bzw. 16a einstückig mit der Stahlplatte 7 verbunden sind, während sie längs ihrer anderen, zu den schmalen Seiten 15a und 16a parallel verlaufenden Kante 17a miteinander einstückig verbunden sind. Die beiden Flächenabschnitte 13a und 14a schließen miteinander einen Winkel von 90° ein und bestehen aus den vor dem Ausklinken die Öffnung 11a füllenden Material der Stahlplatte 7. Da sie gleich lang sind, befindet sich die Kante 17a über der Mitte der Öffnung 11a. Die der Öffnung 11a zugekehrten Seiten der Flächenstücke 13a und 14a bilden Reflexionsflächen für durch die Öffnung 11a eintretende Energiestrahlen.

Die unter dem Bügel 8a befindlichen Bügen 9a bis 9e haben denselben erläuterten Aufbau und dieselben Abmessungen wie der Bügel 8a, sind jedoch durch Zwischenräume 18a bis 18d voneinander getrennt, die, bezogen auf die Längserstreckung der Stahlplatte 7, dieselbe Breite aufweisen wie die durch die Bügel 9a bis 9e zur Rückseite der Platte 7 abgeschlossenen Öffnungen 12a bis 12e.

Auf der Vorderseite der Stahlplatte 7 ergibt sich damit eine Reihe von auf gleicher Höhe über der Unterkante der Stahlplatte 7 angeordneten rechteckigen Öffnungen 12a bis 12e, die durch gleich breite Zwischenräume 18a bis 18b voneinander getrennt sind und hinter denen die Schrägflächen der Bügel 9a bis 9e sichtbar sind, die zu der an der Vorderseite der Stahlplatte 7 gebildeten Ebene 10 unter einem Winkel von 45° verlaufen. Die Bügel 9a bis 9e bilden in einer später noch näher erläuterten Weise eine Taktspureinrichtung, während die Bügel 8a bis 8c eine Binärzahl codieren, weshalb ihre Lage und Anzahl für einen jeweiligen Informationsträger 6 individuell typisch ist. Für die Lage und Breite der Bügel 8 aus der oberen Zeile des Informationsträgers 6 gilt lediglich die Beschränkung, daß die Breite eines jeweiligen Bügels 8, gemessen in Längsrichtung des Informationsträgers 6, ein ganzzahliges Vielfaches der Breite der untereinander gleichen Bügel 9a bzw. der dieselbe Breite aufweisenden Zwischenräume 18a bis 18d sein muß und in vertikaler Richtung ein Bügel 8 entweder mit einem der Bügel 9a bis 9e oder einem der Zwischenräume 18a bis 18d fluchten muß. Bei dem gezeigten Ausführungsbeispiel fluchtet deswegen der Bügel 8a mit dem Bügel 9a, während der darauffolgende Bügel 8b die doppelte Breite aufweist und damit einen Bereich entsprechend der Breite des Bügels 9b zusammen mit dem Zwischenraum 18b überstreicht. Mit dem Bügel 9c fluchtet ein entsprechender Zwischenraum 18c, während mit dem Zwischenraum 18c wiederum ein Bügel, nämlich der Bügel 8c der oberen Reihe, fluchtet. Dementsprechend enthält der Informationsträger 6 auf seiner Vorderseite in der oberen Reihe die auf die Öffnung 12a ausgerichtete Öffnung 11a, dann einen Zwischenraum, anschließend eine doppelt breite Öffnung 11b, wiederum einen Zwischenraum, und schließlich die eine einfache Breite aufweisende Öffnung 11c, woran anschließend sich der Informationsträger 6 glatt fortsetzt. Wird nun einer Öffnung 11 bzw. 12 der Wert 1 und dem Zwischenraum 12 bzw. 19 der Wert 0 zugeordnet, so ist in der unteren Reihe der Taktspureinrichtung die Zahl 101010101 codiert, während in der oberen Reihe, bezogen auf die Leserichtung von links nach rechts, auf der Vorderseite die Zahl 101101000 codiert ist.

Bei dieser Art der Zuordnung entspricht jeder Bügel 9a bis 9e bzw. jeder Zwischenraum 18a bis 18d aus der unteren Zeile einer Zahlenstelle aus der oberen Zeile, weshalb mit dem gezeigten Ausführungsbeispiel eine Binärzahl mit neun Stellen sich darstellen läßt, entsprechend einer Dezimalzahl zwischen 0 und $2^9$ -1.

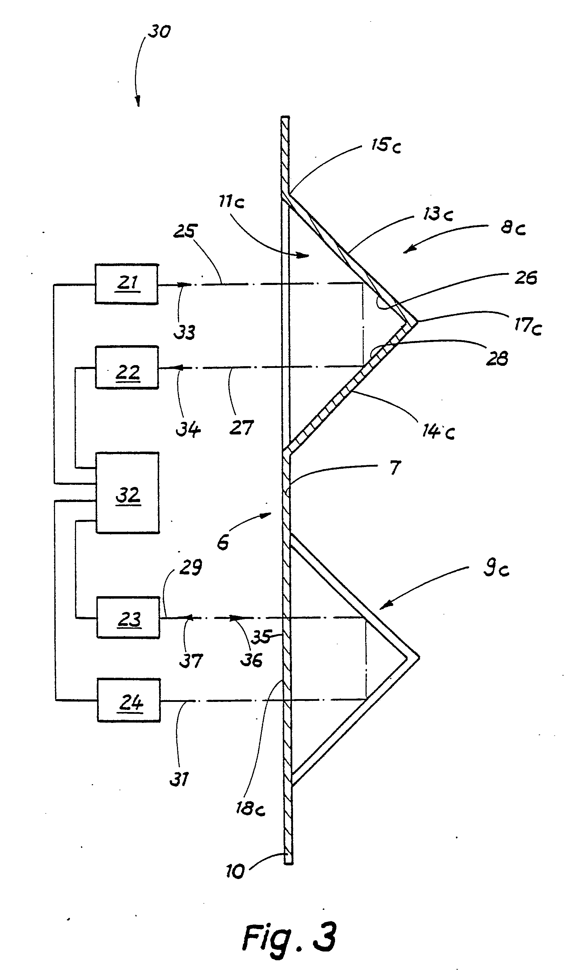

Die Art der Auswertung des Informationsträgers 6 nach Fig. 2 ist anhand von Fig. 3 erläutert. An der Stelle, an der innerhalb der Anlage, die von der Transporteinrichtung durchlaufen wird, die maschinelle Erkennung erfolgen soll, befinden sich übereinander auf der Höhe der mitsamt den Transporteinrichtungen 1 vorbeilaufenden Informationsträger 6 ein Sender 21 sowie ein Empfänger 22, die beide achsparallel zueinander arbeiten und sich auf der Höhe der Öffnungen 11 befinden. Darunter sind ein weiterer Sender 23 und ein weiterer Empfänger 24 angeordnet, die auf der Höhe der unteren Öffnungen 12 vorgesehen sind und ebenfalls achsparallel in Richtung auf den Informationsträger 6 "sehen". Die Sender 21, 23 sowie die Empfänger 22, 24 arbeiten mit Ultraschall oder Licht aus dem sichtbaren oder dem nicht sichtbaren Bereich, und zwar emitiert der Sender 21 bzw. der Sender 23 einen gebündelten Strahl mit möglichst geringem Öffnungswinkel senkrecht zu der Vorderseite 10 des Informationsträgers 6. Die optische Achse des Senders 21, die durch eine strichpunktierte Linie 25 veranschaulicht ist, trifft etwa auf die Mitte der Vorderseite des schrägen Flächenabschnittes 13c auf, wobei deren Vorderseite eine Reflexionsfläche 26 bildet. Der Empfänger 22 ist derart angeordnet, daß seine optische Achse, veranschaulicht durch eine strichpunktierte Linie 27, unter einem Winkel von 45° auf die Vorderseite des Flächenabschnittes 14c auftritt, dessen dem Empfänger 22 zugekehrte Seite eine Reflexionsfläche 28 darstellt. Für die Anordnung des Senders 23 und des Empfängers 24 gilt sinngemäß das Gleiche im Hinblick auf die Bügel 9, von denen wegen der geschnittenen Darstellung nur der Bügel 9c sichtbar ist. Die optischen Achsen des Senders 23 sowie des Empfängers 24 sind mit 29 bzw. 31 bezeichnet.

Sowohl die Sender 21, 23 als auch die Empfänger 22, 24 sind an eine zentrale Steuereinrichtung 32 angeschlossen, die die von den Sendern und Empfängern abgestrahlten und empfangenen Signale miteinander synchronisiert und auswertet. Die Arbeitsweise ist wie folgt: Wenn die Aufnahme- und Transporteinrichtung 1 an der in Fig. 3 schematisch gezeigten Lesestation vorbeibewegt wird, fällt die von den Sendern 21 und 23 abgestrahlte und focussierte Energie nacheinander entsprechend der Gestaltung des Informationsträgers 6 in eine Öffnung 11 bzw. 12 oder auf einen zwischen den Öffnungen 11 bzw. 12 befindlichen Zwischenraum 19 oder 18. Es sei angenomen, daß ein Zustand erreicht ist, in dem der Sender 21 der Öffnung 11c gegenübersteht. Die von ihm abgestrahlte Energie bewegt sich in Richtung eines Pfeiles 33 längs der optischen Achse 25 zu der Reflexionsfläche 26, wird dort in Richtung auf die Reflexionsfläche 28 reflektiert, um schließlich längs der optischen Achse 27 in Richtung eines Pfeiles 34 zu dem Empfänger 22 zu gelangen. Da die Reflexionsflächen 26 und 28 keine idealen Spiegel sind, wird zusätzlich mit der Reflexion eine Streuung der Energie auftreten, wobei jedoch das Maximum der Streukeule jeweils in Richtung der gezeigten strichpunktierten Linie verläuft. Der Empfänger 22 erhält trotz mehrfacher diffuser Reflexion genügend Energie.

Da in der erwähnten Stellung des Informationsträgers 6 gegenüber der Lesestation 30 dem Sender 23 der Zwischenraum 18c gegenübersteht, wirkt dieser Bereich der Vorderseite 10 der Platte 7 als Reflexionsfläche 35, die rechtwinklig zu der optischen Achse 29 verläuft, weshalb die von dem Sender 23 abgestrahlte und ebenfalls fokussierte Energie längs eines Pfeiles 36 auf der optischen Achse 29 zu der Reflexionsfläche 35 hinläuft, dort in sich selbst reflektiert wird, um längs der optischen Achse 29 entsprechend einem Pfeil 37 zu dem Sender 23 zurückzukehren. Es gelangt deswegen nahezu keine Energie von dem Sender 23 zu dem Empfänger 24, der folglich kein Signal abgibt, obwohl an der Vorderseite 10 die Energie auch nur diffus reflektiert wird.

Da sich die Aufnahme- und Transporteinrichtung 1 kontinuierlich weiterbewegt, wird als Nächstes die Öffnung 12d vor den Sender 23 und den Empfänger 24 kommen während dem Sender 21 und dem Empfänger 22 ein Bereich der planen Vorderseite 10 gegenüberstehen wird. Es wird deswegen in dieser Situation der Empfänger 22 von dem Sender 21 keine Energie mehr erhalten, wohingegen andererseits jetzt die von dem Sender 23 abgestrahlte Energie durch die Öffnung 12d hindurchtritt, um an dem Bügel 9d in der Richtung auf den Empfänger 24 zumindest anteilsmäßig reflektiert zu werden.

Es kann auf diese Weise der gesamte Informationsträger 6 abgetastet werden, wobei mit Hilfe eines Wechsels von 0 nach 1 bzw. von 1 nach 0 im Bereiche der Taktspureinrichtung, die durch die Öffnungen 12 bzw. die Zwischenräume 18 gegeben ist, festgelegt wird, ob in der darüber befindlichen Identifikationseinrichtung eine neue Zahlenstelle erreicht ist oder nicht. Es wird so möglich, im Bereich des Bügels 8b zu erkennen, daß zweimal der Wert 1 aufeinanderfolgt.

Die beschriebene Anordnung liefert an der Seite des Empfängers 22 bzw. 24 selbst dann noch ein brauchbares Signalverhältnis, wenn die Reflexionsflächen 26, 28 und 35 angelaufen, korrodiert, verrußt, verschmutzt oder sonstwie mattiert sind, denn wenn die Energie über die Reflexionsflächen 26 und 28 geleitet wird, wird zu dem Empfänger 22 oder 24 immer noch mehr Energie des Senders 21 oder 23 gelangen, als wenn die Energie des Senders an der Reflexionsfläche 35 zum Sender zurückgeworfen wird und damit am Empfänger 22 bzw. 24 vorbei reflektiert wird. Abgesehen davon kann die Energieform, mit der die Leseeinrichtung arbeitet, dem Zustand angepaßt werden, in dem sich jeweils der Informationsträger 6 befindet, da sich Licht und Ultraschall, was das Relektieren an Flächen anbelangt, gleich verhalten, womit es möglich ist, diesen aus Reflexionsflächen zusammengesetzten Informationsträger mit einer insoweit beliebigen Energieform abzutasten, wobei Sender und Empfänger sich auf derselben Seite der Aufnahme-und Transporteinrichtung 1 befinden, die ein Durchstrahlen nicht ermöglichen.

Bei dem in den Fig. 2 und 3 gezeigten Ausführungsbeispiel muß die aus dem Sender 21 austretende Energie zwei Mal reflektiert werden, ehe sie zu dem Empfänger gelangt. Da die Reflexionsflächen 26 und 28 derselben Wärmebehandlung unterliegen wie die Teile, die sich in dem Behälter 1 befinden, ist unter Umständen eine Oberflächenbeschaffenheit eingetreten, die nur noch verhältnismäßig wenig Licht zu reflektieren vermag. Nach einer zweimaligen Reflexion, bei der entsprechend viel Licht durch Absorption und Streuung verlorengeht, wird nur verhältnismäßig wenig Licht beim Empfänger noch ankommen. Es kann deswegen vorteilhaft sein, die gezeigte Anordnung derart abzuwandeln, daß das Licht mit Hilfe einer einfachen Reflexion vom Sender zum Empfänger gelangt. Dies kann dadurch erreicht werden, daß die optischen Achsen 25 und 27 bzw. 29 und 31 von Sender 21 bzw. 23 und Empfänger 23, 24 sehr dicht nebeneinandergerückt werden, damit das Streulicht, das von der planen Vorderseite 10 in Richtung auf den Sener 21 zurückreflektiert wird, auch zu einem großen Teil in den Empfänger 22 gelangt, weil dessen lichtempfindliches Organ in demjenigen Bereich des Streulichtkegels liegt, der noch eine genügende Lichtintensität aufweist. In diesem Falle muß die plane Vorderseite 10 auf alle Fälle diffus reflektierend ausgebildet sein.

Um bei einer solchen Anordnung den anderen binären Wert darstellen zu können, wird im Falle der Indentifikationseinrichtung der Flächenabschnitt 13 weggelassen, während im Falle der Taktspureinrichtung der untere Flächenbereich 14 fortgelassen wird. Fällt nun Licht von dem Sender durch die Öffnung 11 und auf die Reflexionsfläche 28, dann wird dieses Licht an der Reflexionsfläche 28 nach oben wegreflektiert, also überwiegend an dem Empfänger 22 vorbei; entsprechend wird das Licht des Senders 23, sobald es durch eine entsprechende Öffnung 12 fällt, nach unten hauptsächlich wegreflektiert, so daß praktisch kein Licht mehr zum Empfänger 24 gelangen kann. Die Zuordnung zwischen binärer Null und binärer Eins wäre dann umgekehrt zu der Zuordnung bei den Fig. 2 und 3, in der Weise, daß an der Stelle des geschlossenen Zwischenraumes 18 oder 19 ein wesentlicher Bestandteil des ausgesandten Lichtes zum Empfänger 22 bzw. 24 gelangt, was dem Zustand der binären Eins entspricht, während abweichend gegenüber vorher, die Öffnungen 11 und 12 für die binäre Null codieren, weil das durch die Öffnungen 11 und 12 hindurchfallende Licht am Empfänger vorbeireflektiert wird.

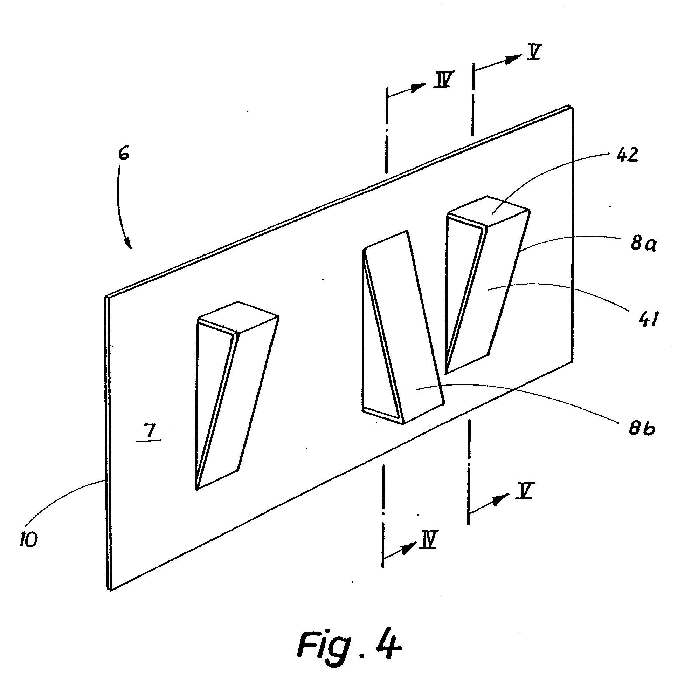

Wenn die zusätzliche Anbringung der Taktspureinrichtung unerwünscht ist, läßt sich mit Hilfe der Reflexionsflächen auch ohne weiteres ein ternäres Zahlensystem verwirklichen, wozu dann ein in Fig. 4 beispielhaft veranschaulichter Informationsträger 6 verwendet wird. Auch dieser Informationsträger 6 besteht aus einer Stahlplatte 7, aus der an jeder Zahlenstelle der ternären Zahl ein Bügel 8a oder 8b ausgeklinkt ist oder die Platte unverändert belassen wurde, so daß deren Frontseite 10 die Reflexionsflächen bildet. Zum Unterschied gegenüber dem vorherigen Ausführungsbeispiel sind jetzt jedoch die Bügel, wie bei 8a und 8b gezeigt, bezogen auf die vor ihnen befindliche Öffnung, unsymmetrisch gestaltet. Sie bestehen nämlich aus einer größeren oder längeren Fläche 41 und einer dagegen sehr viel kürzeren Fläche 42, wobei die Fläche 41 unter einem verhältnismäßig spitzen Winkel gegenüber der Vorderseite 10 geneigt ist. Die Flächen 41 und 42 sind wiederum einstückig miteinander und auch einstückig mit der Stahlplatte 7 verbunden; sie werden von dem ursprünglich die zugehörige Öffnung verschließenden Material gebildet.

Je nach dem, ob die unter dem spitzen Winkel verlaufende längere Fläche 41 der Unterkante des Informationsträgers 6 oder dessen Oberkante benachbart ist, kommt entweder eine Orientierung gemäß dem Bügel 8a oder gemäß dem Bügel 8b zustande.

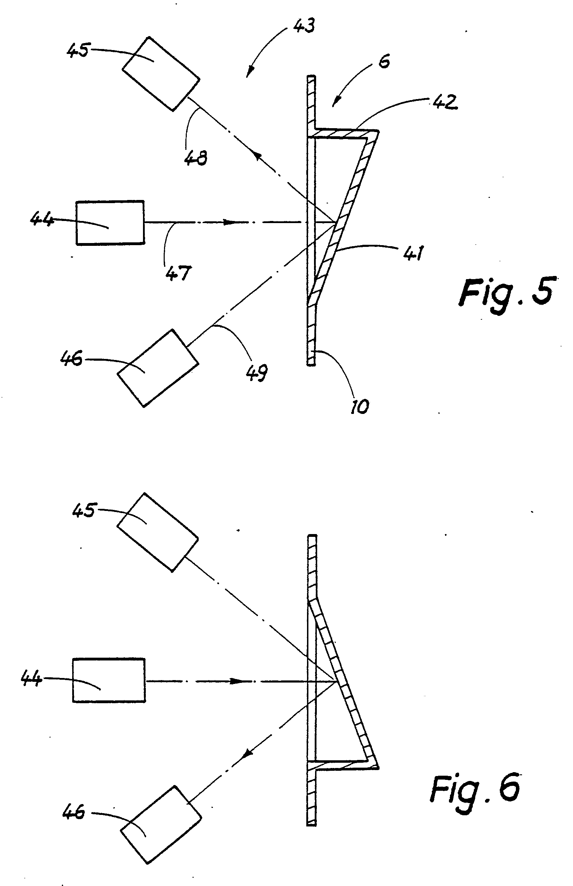

Die maschinelle Abtastung des Informationsträgers 6 nach Fig. 4 geschieht mit einer in den Fig. 5 und 6 schematisiert gezeigten Lesestation 43, die einen Sender 44 sowie zwei Empfänger 45 und 46 enthält. Der Sender 44 ist mit seiner optischen Achse 47 senkrecht zu der Vorderseite 10 des Informationsträgers 6 ausgerichtet, während die beiden Empfänger 45 und 46 mit ihren optischen Achsen 48 und 49 derart ausgerichtet sind, daß sie die an der Fläche 41 reflektierte Energie empfangen können. Im einzelnen bedeutet dies, daß der Empfänger 45 sich über dem Sender 44 befindet und seine optische Achse 48 gegenüber der Senkrechten auf die Fläche 41 um denselben Betrag geneigt ist, wie die optische Achse 47 gegenüber ebenfalls dem Lot auf die Fläche 41, wenn die Fläche 41 in der Nähe der Unterkante des Informationsträgers 6 beginnt, während sich die Fläche 42 neben seiner Oberkante befindet. Der Empfänger 46 ist mit seiner optischen Achse 49 spiegelsymmetrisch dazu angeordnet. Wenn nun, wie Fig. 5 veranschaulicht, vor dem Sender 44 eine Öffnung in dem Informationsträger 6 vorbeiläuft, hinter die Fläche 41 im Bereich der Unterkante abgeht, um nach oben zu von dem Informationsträger wegzustreben, wird die von dem Sender 44 längs der optischen Achse 47 ausgestrahlte Energie zu dem Empfänger 45 reflektiert werden. Es wird jedenfalls das Maximum der Streukeule in Richtung auf den Empfänger 45 gerichtet sein, während der Empfänger 46 keine Energie aus dem Sender 44 bekommt. Wenn umgekehrt, wie Fig. 6 zeigt, sich vor dem Sender 44 eine Öffnung des Informations trägers 6 befindet, hinter der die Fläche 41 nach unter zu divergiert, und zwar um den gleichen Winkel, wird jetzt die von dem Sender 44 abgestrahlte Energie hauptsächlich zu dem Empfänger 46 gelangen, während der Empfänger 45 kein Signal erhält. Der letzte Betriebsfall besteht darin, daß sich vor dem Sender 44 eine geschlossene Stelle des Informationsträgers 6 entsprechend einem Zwischenraum befindet. Die plane Frontseite 10 wird dann die vom Sender 44 abgestrahlte Energie zu diesem zurückreflektieren, während die ober- und unterhalb des Senders 44 befindlichen Empfänger 45 und 46 keine Energie erhalten.

## Ansprüche

1. Aufnahme- und Transporteinrichtung für Werkstücke, die in einer Wärmebehandlungsanlage wie einem Bad oder Industrieofen mit Wärme zu behandeln sind und zusammen mit der Aufnahme- und Transporteinrichtung den Industrieofen oder das Bad durchlaufen, dadurch gekennzeichnet, daß sie an einer Seite (3) eine mehrstellige temperaturfeste Identifikationseinrichtung (6) trägt, die wenigstens je Zahlenstelle eine Reflexionseinrichtung (8, 9, 18, 19) für von einem Sender (21, 23, 44) ausgestrahlte Energie aufweist, und daß die Reflexionseinrichtung (8, 9, 18, 19) einer jeden Zahlenstelle derart ausgerichtet ist, daß sie beim Passieren des Senders (21, 23, 44) entsprechend dem Wert der Zahlenstelle die Energie des Senders (21, 23, 44) auf einen Empfänger (22, 24, 45, 46) oder eine von dem Empfänger (22, 24, 45, 46) entfernt liegende Stelle reflektiert.

2. Aufnahme- und Transporteinrichtung nach Anspruch 1, dadurch gekennzeichnet, daß neben der Identifikationseinrichtung (6) eine Taktspureinrichtung (9, 18) angeordnet ist, die je Zahlenstelle der Identifikationseinrichtung (6) eine Reflexionsfläche (9, 18) aufweist, und daß die Reflexionsflächen (9, 18) der Taktspureinrichtung (9, 18) alternierend derart ausgerichtet sind, daß sie beim Passieren eines Senders (23) abwechselnd die Energie des Senders (23) auf einen zugehörigen Empfänger (24) oder an eine von dem Empfänger (24) entfernt liegende Stelle reflektieren.

3. Aufnahme- und Transporteinrichtung nach den Ansprüchen 1 und/oder 2, dadurch gekennzeichnet, daß die Reflexionseinrichtungen (8, 9, 18, 19) Reflexionsflächen (26, 28, 35) für sichtbares Licht bilden.

4. Aufnahme- und Transporteinrichtung nach den Ansprüchen 1 und/oder 2, dadurch gekennzeichnet, daß die Reflexionseinrichtungen (8, 9, 18, 19) Reflexionsflächen (26, 28, 35) für außerhalb des sichtbaren Bereiches liegendes Licht bilden.

5. Aufnahme- und Transporteinrichtung nach Anspruch 4, dadurch gekennzeichnet, daß das außerhalb des sichtbaren Bereiches liegende Licht infrarotes Licht ist.

6. Aufnahme- und Transporteinrichtung nach den Ansprüchen 1 und/oder 2, dadurch gekennzeichnet, daß die Reflexionseinrichtungen (8, 9, 18, 19) Reflexionsflächen (26, 28, 35) für Ultraschall bilden.

7. Aufnahme- und Transporteinrichtung nach den Ansprüchen 3 bis 6, dadurch gekennzeichnet, daß die Reflexionsflächen (26, 28, 35) nicht spiegelnd sind.

8. Aufnahme- und Transporteinrichtung nach einem der Ansprüche 3 bis 6, dadurch gekennzeichnet, daß dieeinem binären Wert entsprechenden Reflexionsflächen (35) von entsprechenden Bereichen einer planen durchgehenden Fläche (10) gebildet sind, und daß die Reflexionsflächen (26, 28) mit dem anderen binären Wert von gegenüber dieser Fläche (10) geneigten Flächen (13, 14, 41) gebildet sind.

9. Aufnahme- und Transporteinrichtung nach einem der Ansprüche 3 bis 6, dadurch gekennzeichnet, daß die Reflexionsflächen (35), die dem einen binären Wert entsprechen, von einer planen Stahlplatte (7) gebildet sind, und daß sich die in dem anderen binären Wert entsprechenden Reflexionsflächen (26, 28) in bzw. hinter zugehörigen Öffnungen (11, 12) in der Stahlplatte (7) befinden.

10. Aufnahme- und Transporteinrichtung nach Anspruch 9, dadurch gekennzeichnet, daß die dem anderen binären Wert entsprechenden Reflexionsflächen von aus der Platte ausgeklinkten Abschnitten (13, 14, 41) gebildet sind, die wenigstens längs einer ihrer Kanten (15, 16) einstückig mit der Platte (7) verbunden bleiben und die gegenüber der Vorderseite (10) der Platte (7) schräg verlaufen.

11. Aufnahme- und Transporteinrichtung nach Anspruch 8 oder 9, dadurch gekennzeichnet, daß die einem binären Wert entsprechenden Reflexionsflächen (26, 28) von jeweils zwei Teilreflexionsflächen gebildet sind, die unter einem Winkel vorzugsweise 90° zueinander verlaufen und hinter einer Öffnung (11, 12) angeordnet sind.

12. Aufnahme- und Transporteinrichtung nach einem oder mehreren der vorhergehenden Ansprüche, dadurch gekennzeichnet, daß die Reflexionseinrichtungen (8, 9) der Identifikationseinrichtung (6) in Bewegungsrichtung der Aufnahme- und Transporteinrichtung (1) nebeneinander angeordnet sind.

13. Aufnahme- und Transporteinrichtung nach einem oder mehreren der vorhergehenden Ansprüche, dadurch gekennzeichnet, daß die Reflexionseinrichtungen (9) der Taktspureinrichtung, bezogen auf die Transportrichtung der Aufnahme- und Transporteinrichtung (1) nebeneinander angeordnet sind.

14. Aufnahme- und Transporteinrichtung nach einem oder mehreren der vorhergehenden Ansprüche, dadurch gekennzeichnet, daß die Identifikationseinrichtung (6) zur Darstellung von Zahlen im ternären Zahlensystem eine dritte Art von Reflexionseinrichtungen (41) aufweist, die entsprechend dem zusätzlich möglichen Wert beim Passieren des Senders (44) entsprechend dem zusätzlichen Wert der Stelle die Energie des Senders (44) auf einen zweiten Sender (45, 46) reflektieren.

Fig. 1

EP 0 313 897 A2

Fig. 2

EP 0 313 897 A2

EP 0 313 897 A2

Fig. 3

Fig. 4

EP 0 313 897 A2

Fig. 5

Fig. 6